# EUROPÄISCHE PATENTSCHRIFT

(11) **EP 3 226 678 B1**
(45) Veröffentlichungstag und Bekanntmachung des Hinweises auf die Patenterteilung: **13.10.2021**
(21) Anmeldenummer: 15825920.0
(22) Anmeldetag: 03.12.2015
(51) Int. Cl.: A01G 9/16, A01G 31/02

(54) **VORRICHTUNG ZUR PFLANZENAUFZUCHT**
DEVICE FOR CULTIVATING PLANTS
DISPOSITIF DE CULTURE DE PLANTES

(30) Priorität: 04.12.2014 DE 202014009561 U
(43) Veröffentlichungstag der Anmeldung: 11.10.2017
(73) Patentinhaber: Gestigkeit, Marcus, 40489 Düsseldorf (DE)
(72) Erfinder: Gestigkeit, Marcus, 40489 Düsseldorf (DE)
(74) Vertreter: Christophersen & Partner Partnerschaft mbB Patentanwälte
(86) Internationale Anmeldenummer: PCT/DE2015/100515
(87) Internationale Veröffentlichungsnummer: WO 2016/086923

(56) Entgegenhaltungen:
- EP-A1- 0 525 231
- EP-A1- 1 621 069
- CN-U- 203 101 958
- JP-A- H02 308 735
- KR-A- 20120 100 345
- None

## Beschreibung

Die vorliegende Erfindung betrifft eine Vorrichtung zur Pflanzenaufzucht, die mehrere Zonen aufweist.

Zur Kultivierung von kälteempfindlichen Pflanzen in einer kälteren Umgebung werden in der Regel Gewächshäuser oder Treibhäuser verwendet. In diesen Treibhäusern wird der sogenannte Treibhauseffekt ausgenutzt, d. h. das Innere des Gewächshauses, also das Pflanzsubstrat und die Luft, wird durch einfallende Sonnenstrahlen erwärmt und die Wände verhindern, dass die Wärme wieder nach außen abgegeben wird. Traditionell werden Holz-Glaskonstruktionen verwendet, Alternativen stellen transparente Kunststoffplatten bzw. -folien und Metallrahmen dar. Die Größe von Gewächshäusern reicht von kleinen Plastikbehältern für die Fensterbank bis hin zu riesigen Hallen, die im gewerblichen Gartenbau eingesetzt werden.

Je nach Größe der Gewächshäuser werden diese nicht nur im gewerblichen Gartenbau eingesetzt, sondern auch in kleineren Gärten und Räumen.

Aus dem Stand der Technik bekannt sind auch sogenannte Grow-Zelte bzw. Grow-Rooms, die eine Pflanzenzucht auf engstem Raum ermöglichen. Im Handel erhältliche Grow-Rooms bestehen aus Gestänge-Konstruktionen ähnlich wie bei Campingzelten, die mit lichtdichtem Zellstoff ausgestattet sind. Nachteilig bei diesen Grow-Rooms ist, dass sie eine separate Beleuchtung benötigen, auch ist die Gesamtkonstruktion für empfindliche Pflanzen, die innerhalb geschlossener Räume gehalten werden sollen, umständlich.

JPH02308735 A offenbart eine Vorrichtung zur Aufzucht von Pflanzen, wie z.B. Gemüse.

Der vorliegenden Erfindung lag die Aufgabe zugrunde, eine Vorrichtung zur Pflanzenaufzucht (Pflanzenzucht) zur Verfügung zu stellen, die innerhalb von geschlossenen Räumen genutzt werden kann, aber eine für die Pflanzen optimale und mit großen Gewächshäusern vergleichbare Versorgung bietet.

Gegenstand der Erfindung ist eine Vorrichtung zur Pflanzenaufzucht gemäß Anspruch 1 mit mehreren Zonen, welche eine Basiszone mit Anschlüssen und Einrichtungen für die Versorgung mit Wasser und Elektrizität, eine Wachstumszone für die Aufnahme der Blatt-tragenden Teile der Pflanzen und eine Lichtzone mit einer oder mehreren Beleuchtungseinheiten aufweist.

Mit der erfindungsgemäßen Vorrichtung ist es möglich, alle für die optimale Versorgung von Pflanzen erforderlichen Anschlüsse und Einrichtungen auf kleinem Raum unterzubringen, so dass diese Vorrichtung auch in kleineren Gärten und Räumen, einschließlich Privaträumen, genutzt werden kann. Die erfindungsgemäße Vorrichtung lässt sich derart einstellen, dass das System zur Aufzucht von Pflanzen nahezu autark arbeitet; durch eine automatisierte Bewässerung, Belüftung und/oder Beleuchtung sowie eine automatisierte Zufuhr von Nährstoffen ist nur ein geringer Pflegeaufwand erforderlich.

Die erfindungsgemäße Vorrichtung in geschlossener Form ausgestaltet sein und in Räumen als geschlossene Vorrichtung, beispielsweise in der Größe eines Schranks, aufgestellt werden. Es ist auch möglich, die Vorrichtung als offene Vorrichtung zu errichten, indem die einzelnen Zonen einem Raum eines Gebäudes eingerichtet werden.

Die einzelnen Pflegeintervalle, wie Besprühen der Blätter mit Wasser und Nährstoffen, Wasserversorgung über das Substrat, wie Pflanzenerde, und die Versorgung mit Nährstoffen, ist frei einstellbar, gegebenenfalls über geeignete Software programmierbar, und kann auf jede Pflanzenart gezielt abgestimmt werden. Über das Bestimmen von Beleuchtungszeiten, Bestimmung der Feuchtigkeit im Substrat und in der Luft sowie von Temperatur von Substrat und Luft können die Nährstoffzugaben automatisiert werden. Die Überdüngung oder auch Überwässerung bzw. das Austrocknen der Pflanzen können unter Einsatz des erfindungsgemäßen Systems vermieden werden.

Die erfindungsgemäße Vorrichtung weist mehrere Zonen auf, zumindest eine Basiszone, eine Wachstumszone und eine Lichtzone.

Die Basiszone ist vorzugsweise in zwei Ebenen unterteilt. In der unteren Ebene sind die für die Versorgung der Pflanzen erforderlichen Einrichtungen angeordnet. Zu diesen Einrichtungen zählen beispielsweise ein Wasseranschluss, Anschlüsse an die Stromversorgung, ein Vorratsbehälter für Wasser, für Nährstoffe für die Pflanzen und/oder für Substanzen, die bei der Aufzucht von Pflanzen eingesetzt werden können, Pumpen und Ventile etc. für den Transport von Wasser und anderen Flüssigkeiten, wie Nährlösungen, innerhalb der erfindungsgemäßen Vorrichtung. Die Versorgungseinrichtungen können ganz oder teilweise auch außerhalb der Vorrichtung angeordnet sein, das ist insbesondere dann von Vorteil, wenn mehrere Vorrichtungen zu versorgen sind.

Die untere Ebene der Basiszone sollte für die Handhabung durch den Benutzer gut zugänglich sein und zumindest eine Öffnung in Form einer Tür aufweisen. Die Handhabung der unteren Ebene kann weiter vereinfacht werden, wenn die dort angeordneten Teile alle oder teilweise auf einem Auszug gelagert sind, der über eine verschließbare Öffnung herausgefahren werden kann und die einzelnen Teile somit gut zugänglich sind.

Die Wasserversorgung der Pflanzen kann entweder über einen direkten Anschluss an die öffentliche Wasserversorgung oder über einen Vorratstank erfolgen. In einer möglichen Ausgestaltung der vorliegenden Erfindung wird das Wasser aus der öffentlichen Versorgung oder über einen Vorratstank zunächst in einen Mischbehälter geleitet. Aus diesem Mischbehälter kann das Wasser entweder als solches oder nach Zusatz von Düngemitteln oder Nährstoffen der Pflanze zugeführt werden, beispielsweise durch Zugabe in den Pflanztopf oder durch Besprühen. Der Einsatz eines Mischbehälters hat den Vorteil, dass eine definierte Wassermenge mit einer ebenfalls definierten Menge an Düngemittel und Nährstoffen vermischt werden kann, die auf die Bedürfnisse der Pflanze abgestimmt sind. Aus diesem Mischbehälter kann dann die Zufuhr zur Pflanze erfolgen.

Es ist auch möglich, das Wasser im Mischbehälter mit Sauerstoff anzureichern, beispielsweise über Druckluft. Die Zufuhr von Sauerstoff oder Druckluft kann über eine Pumpe erfolgen, wie über eine Pumpe, wie sie im Handel für Aquarien oder Teiche erhältlich ist.

In der oberen Ebene der Basiszone sind vorzugsweise Aufnahmen für Pflanztöpfe etc. angeordnet. In einer bevorzugten Ausführungsform der vorliegenden Erfindung ist die obere Ebene räumlich getrennt von der unteren Ebene. Eine solche Trennung hat den Vorteil, dass Versorgungseinrichtungen für Wasser und Strom sicher untergebracht werden können und auch den geforderten Sicherheitsstandards entsprechen. Die Trennung in zwei Ebenen kann über eine Platte und Wanne erfolgen, die gleichzeitig als Auffangwanne für Tropfwasser dienen.

Ein Pflanztopf oder auch mehrere Pflanztöpfe können in der oberen Ebene der Basiszone angeordnet werden. Um einen Zugang zu allen Seiten der Pflanze zu ermöglichen, kann der Pflanztopf auf einer drehbaren Unterlage angeordnet werden. Werden mehrere Pflanztöpfe gleichzeitig in der erfindungsgemäßen Vorrichtung untergebracht, so hat es sich als geeignet erwiesen, wenn die Pflanzen auf einer drehbaren Unterlage abgestellt werden können, die wiederum beispielsweise auf einem Drehkreuz angeordnet ist. Ein derartiges Drehkreuz sollte ebenfalls drehbar gelagert sein. Auf diese Weise ist es möglich, die Position der einzelnen Pflanzen zu verändern und auch die Pflanze selbst zu drehen, so dass alle Pflanzenteile je nach Bedarf ausgerichtet werden können. Sowohl die Aufnahmen für die Pflanztöpfe als auch das gegebenenfalls vorhandene Drehkreuz können sowohl rein mechanisch, also von Hand, als auch elektrisch über entsprechende Motoren betrieben werden.

Die Lagerung der Pflanzen auf in sich drehbaren Unterlagen hat den Vorteil, dass die Position der Pflanzen in Richtung Licht verändert werden kann. Dadurch werden die Pflanzen gleichmäßig mit Licht versorgt, was zu einer deutlichen Stärkung der einzelnen Triebe der Pflanze führt.

Die Versorgungseinrichtungen in der unteren Ebene der Basiszone können manuell geregelt oder auch über eine entsprechende elektronische Steuerung inklusive einer Software eingestellt werden. Dadurch sind die Pflegeintervalle frei einstellbar und auf jede Pflanzenart abstimmbar. Die elektronische Steuerung der einzelnen Versorgungseinrichtungen hat den Vorteil, dass nicht nur Wasser, Dünger, Nährstoffe und Licht gezielt zugeführt werden können, auch Beleuchtungszeiten, Luftfeuchtigkeit und die Temperatur der Luft bzw. des Substrats bzw. des Anzuchtmediums können permanent überwacht und gesteuert werden. In Abhängigkeit des jeweiligen Zustands der Pflanze können von der Keimung bis zur Blüte einer Pflanze die einzelnen Parameter auf die Bedürfnisse der Pflanze abgestimmt und entsprechend eingestellt werden.

Die zweite Zone der erfindungsgemäßen Vorrichtung ist die sogenannte Wachstumszone. Diese bietet Raum für die Blatt-tragenden Teile der wachsenden Pflanze und ist oberhalb der Basiszone angeordnet. In der Wachstumszone erfolgt üblicherweise das Wässern der Pflanze über das Anzuchtmedium und auch das Besprühen der Pflanze bzw. der Blätter sowie die Versorgung mit Nährstoffen (Dünger). In der Wachstumszone sind daher vorzugsweise geeignete Vorrichtungen für die Wasserzufuhr angeordnet, beispielsweise Zuführschläuche und daran angeschlossene Düsen, welche über Einrichtungen in der Basiszone versorgt werden. Die Analyse des Substrats bzw. des Anzuchtmediums erfolgt üblicherweise in der Wachstumszone. Über entsprechende Leitungen können die Ergebnisse der Substratanalyse an die gegebenenfalls in der Basiszone angeordnete Software übermittelt werden.

Zur Luftzirkulation und auch zur Verbesserung der Widerstandsfähigkeit der Pflanzen können in der Wachstumszone Ventilatoren angeordnet sein.

Der Zugang zur Pflanze erfolgt in der Wachstumszone vorzugsweise über eine verschließbare Öffnung, beispielsweise eine Tür. Diese Tür sollte eine solche Größe haben, dass sie nicht nur zur Beobachtung und Pflege der Pflanze, sondern auch zur Wartung der in der Wachstumszone angeordneten Vorrichtungen genutzt werden kann.

Oberhalb der Wachstumszone ist die Lichtzone angeordnet, die Raum für Beleuchtungsmittel etc. bietet. Um den Abstand zwischen dem Beleuchtungsmittel und der Pflanze möglichst gleichmäßig zu halten, sollte das Beleuchtungsmittel in der Höhe einstellbar sein. Die Einstellbarkeit des Leuchtmittels kann beispielsweise über einen Aufwickelmechanismus erfolgen. Wenn der Abstand zwischen Pflanze und Leuchtmittel nicht durch den Betreiber der Vorrichtung selbst kontrolliert werden soll, kann eine automatische Abstandskontrolle erfolgen, beispielsweise über eine Lichtschranke. Eine solche Lichtschranke kann auf einen voreingestellten Abstand zwischen Lampe und Spitze der Pflanze eingestellt werden und bei Unterschreitung dieses Abstandes wird ein entsprechendes Signal an die Lampe bzw. die Vorrichtung zum Einstellen der Höhe der Beleuchtung gegeben und die Position der Lampe kann entsprechend verändert und der vorgegebene Abstand wird wieder eingestellt. Um auch die nach innen gerichteten Blätter mit Licht zu versorgen können, können in einer weiteren Ausführungsform der vorliegenden Erfindung in der Wachstums- und/oder Lichtzone Lichtquellen angeordnet werden, die die Pflanze auf Höhe der Blätter beleuchten und/oder die in das Blattwerk hineinragen, wodurch auch die weiter unten in Richtung Wurzelwerk befindlichen und die nach innen gerichteten Blätter mit Licht versorgt werden.

Als Leuchtmittel können beliebige im Handel erhältliche und für die Beleuchtung von Pflanzen geeignete Leuchtmittel eingesetzt werden. Es sind Leuchtmittel bekannt, die eine spezielle, auf Pflanzen zugeschnittene Wellenlänge ausstrahlen, es sind aber auch beliebige aus dem Handel erhältliche Leuchtmittel einsetzbar.

Eine bevorzugte Ausführungsform der Erfindung ist in den beigefügten Figuren dargestellt. Es zeigen:
- Fig. 1: eine Außenansicht der Vorrichtung zur Pflanzenaufzucht;
- Fig. 2: eine Seitenansicht der Basiszone;
- Fig. 3: eine Draufsicht auf die obere Ebene der Basiszone;
- Fig. 4: eine Aufnahme für den Pflanztopf;
- Fig. 5: eine Ansicht der Wachstumszone;
- Fig. 6: eine Draufsicht auf die Wachstumszone;
- Fig. 7: eine Seitenansicht der Lichtzone;
- Fig. 8: eine Draufsicht auf die Lichtzone;
- Fig. 9: Seitenansicht der Lichtzone in einer weiteren Ausführungsform;
- Fig. 10: eine Ansicht der erfindungsgemäßen Vorrichtung mit Pflanzen.

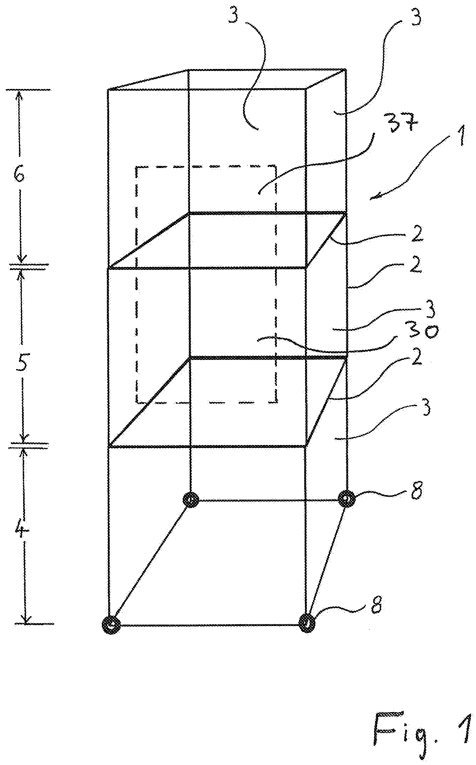

Figur 1 zeigt eine Gesamtansicht der erfindungsgemäßen Vorrichtung 1 zur Pflanzenaufzucht. Es handelt sich um einen kubisch gestalteten Grundkörper. Die Grundkonstruktion wird von Profilen 2 gebildet. Die von den Profilen 2 gebildeten Flächen 3 werden mit vorzugsweise durchsichtigen Glas- oder Kunststoffplatten geschlossen. In der hier dargestellten Ausführungsform ist die Vorrichtung 1 in drei Zonen unterteilt, nämlich in die Basiszone 4, die Wachstumszone 5 und die Lichtzone 6.

Die erfindungsgemäße Vorrichtung 1 kann als mobile Vorrichtung ausgestaltet sein, dazu sind am Boden 7 der Basiszone 4 Rollen 8 angeordnet. Vorzugsweise handelt es sich um Lenkrollen 8, die feststellbar sein können. In einer möglichen Ausgestaltung kann die Vorrichtung 1 auch ohne Rollen, also ortsfest, ausgestaltet sein.

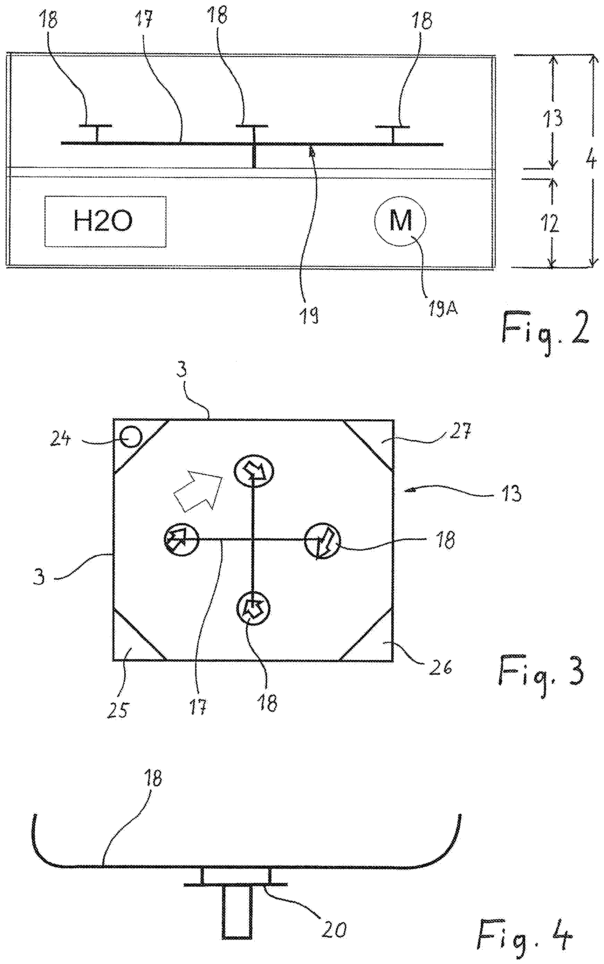

In den Figuren 2 und 3 sind eine Seitenansicht und eine Ansicht von oben auf die Basiszone dargestellt. Die Basiszone ist die Aufnahme für Anschlüsse zu Versorgungsleitungen, wie Wasser und Elektrizität, sowie für das Gefäß für Aufzuchtmedium, wie Pflanzerde. In der hier dargestellten Ausführungsform weist die Basiszone 4 zwei Ebenen 12, 13, auf. In der unteren Ebene 12 sind die Versorgungsanschlüsse für Wasser, Pumpen 14 einschließlich Ventile etc. sowie ein Anschluss für Elektrizität (nicht dargestellt) untergebracht.

Die obere Ebene 13 und die untere Ebene 12 sind durch eine horizontal angeordnete Platte 16 räumlich voneinander getrennt. Die horizontale Platte 16 schließt in der hier dargestellten Ausführungsform bündig mit den Außenwänden 3 der Basiszone ab und kann gleichzeitig als Auffangwanne für Tropfwasser dienen. Das Tropfwasser kann über geeignete Vorrichtungen dem Wasserkreislauf wieder zugeführt werden.

In der oberen Ebene 13 befindet sich eine Anordnung zur Aufnahme von Pflanzbehältern bzw. Pflanztöpfen 17. In der hier dargestellten Ausführungsform werden die Pflanzbehälter auf Drehtellern 18 abgestellt. In der hier dargestellten Ausführungsform befinden sich vier Drehteller 18 in der Basiszone, die ihrerseits auf einem Drehkreuz 19 angeordnet sind. Die Zahl der Drehteller 18 kann variieren und hängt üblicherweise von der Aufnahmekapazität des Innenraums der Zone ab und davon, wie viele Pflanzen gleichzeitig aufgezogen werden sollen.

Das Drehkreuz 19 kann in seinem Zentrum drehbar gelagert sein und elektrisch über eine Zahnriemenübersetzung oder direkt angetrieben werden. Der Elektromotor 19A hierfür befindet sich unterhalb in der unteren Ebene 12. Vorzugsweise ist das Drehkreuz zentriert gelagert.

In einer möglichen Ausführungsform läuft das Drehkreuz außen auf Rollen, so dass auch große Lasten aufgenommen werden können. Auch die Drehteller 18 sind ihrerseits drehbar gelagert auf dem Drehkreuz angeordnet, und um ihre Achse elektrisch antreibbar. In der hier dargestellten Ausführungsform sind vier Drehteller dargestellt; die Anzahl der Drehteller lässt sich in Abhängigkeit von der Größe der erfindungsgemäßen Vorrichtung erweitern oder verringern. Die Möglichkeit, dass die Pflanzen gedreht werden, also ihre Ausrichtung geändert wird, hat den Vorteil, dass sie von allen Seiten gleichmäßig mit Licht versorgt werden können.

In Figur 4 ist ein einzelner Drehteller 18 dargestellt, der an seiner Unterseite ein Lager 20 zur drehbaren Lagerung des Drehtellers um seine Achse aufweist. Der Pflanztopf kann auch direkt auf dem Lager 20 angeordnet werden.

In der oberen Ebene 13 der Basiszone 4 können weitere Einrichtungen angeordnet sein, die für das Wohlbefinden der aufzuziehenden Pflanzen von Bedeutung sind, wie Zu- und Ableitung 24 für Luft, Ventilatoren 25 für die Luftzirkulation und Bewässerungssystem 26 sowie Vorrichtung für die Substratanalyse 27. Solche Einrichtungen befinden sich in den vier Ecken, wo sie die Bewegung der Pflanzen nicht beeinträchtigen können.

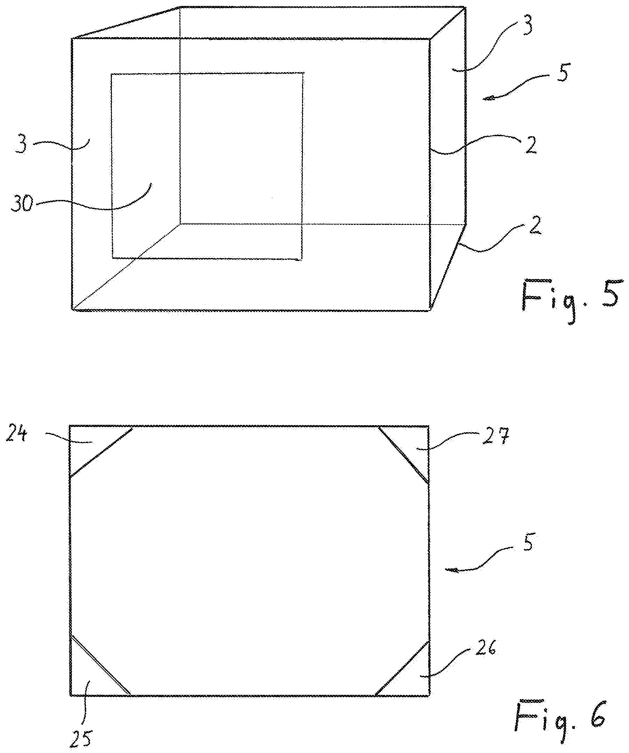

Die in Figur 3 wiedergegebene Wachstumszone 5 ist in der erfindungsgemäßen Vorrichtung 1 der Bereich, in den die anzuziehenden Pflanzen hineinwachsen. Eine Seite der Flächen 3 weist vorzugsweise eine verschließbare Öffnung 30 auf (Figur 5). Durch diese Öffnung 30 können Pflegemaßnahmen an der Pflanze vorgenommen werden. Alle Flächen 3 der Wachstumszone 5 sind üblicherweise für Licht durchlässig, um die Pflanzen mit natürlichem Licht versorgen zu können. Es ist möglich, diese Flächen mit UV-Schutz, Spiegelfolie oder Mitteln zur Verdunklung, wie einem Verdunklungsrollo, auszustatten.

Die in den Ecken angeordneten Vorrichtungen 24, 25, 26, 27 zur Versorgung der Pflanze reichen von der Basiszone 4 üblicherweise auch in die Wachstumszone 5, um Luft und Wasser an jedem beliebigen Ort innerhalb der Vorrichtung zuführen zu können.

In einer weiteren Ausgestaltung der vorliegenden Erfindung ist die verschließbare Öffnung 30 mit einem Schloss ausgestattet. Es ist auch möglich, diese Sicherung mit einem weiteren Sicherheitskontakt zu versehen, so dass das Öffnen der Tür aufgezeichnet und/oder gemeldet wird oder über die angeschlossene Software bzw. Anzeigevorrichtung oder Hardware angezeigt wird. In einer weiteren Ausgestaltung ist es möglich, die gesamte Vorrichtung vom Stromnetz abzutrennen, sobald die Tür geöffnet wird.

Vorrichtungen zur Substratanalyse befinden sich entweder direkt im Substrat oder sie sind außerhalb der Pflanze angebracht, wobei die Messung über einen geeigneten Fühler erfolgt.

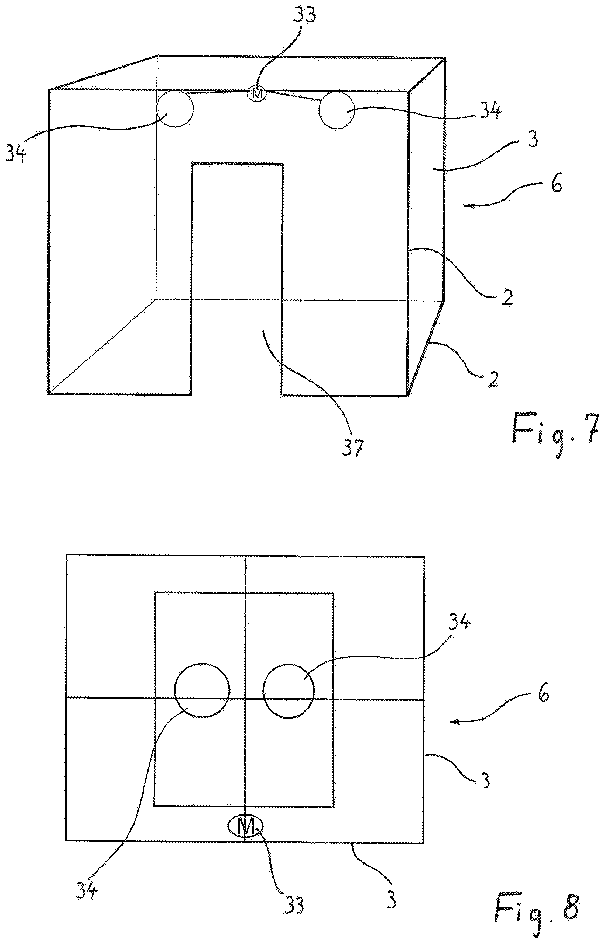

In den Figuren 7 und 8 ist die Lichtzone 6 dargestellt. In der Lichtzone 6 sind Leuchtmittel 34 für die fachgerechte Beleuchtung der Pflanzen angeordnet. Um den Abstand der Leuchtmittel 34 zur Wachstumsspitze der Pflanzen konstant zu halten, können Leuchtmittel derart angeordnet sein, dass sich der Abstand des Leuchtmittels 34 in Bezug auf die Pflanzen einstellen lässt. So ist es beispielsweise möglich, den Abstand zwischen Pflanze und Leuchtmittel 34 konstant zu halten, indem sich das Leuchtmittel über einen entsprechenden Mechanismus, wie über einen Aufwickelmechanismus, nach oben in Richtung Oberseite 35 der Vorrichtung hochbewegen lässt. Vorzugsweise erfolgt das Einstellen des Abstandes zwischen Leuchtmittel und Pflanze mittels eines Elektromotors 33 automatisch, und wird über Sensoren gesteuert.

Auch die Lichtzone 6 weist vorzugsweise eine Öffnung 37 auf einer Seite auf, die Wartungsarbeiten innerhalb dieser Zone 6 ermöglicht.

Vorzugsweise sind die Öffnung 37 der Lichtzone und die Öffnung 30 der Wachstumszone so angeordnet, dass eine sich über beide Zonen 5, 6 erstreckende gemeinsame Öffnung entsteht.

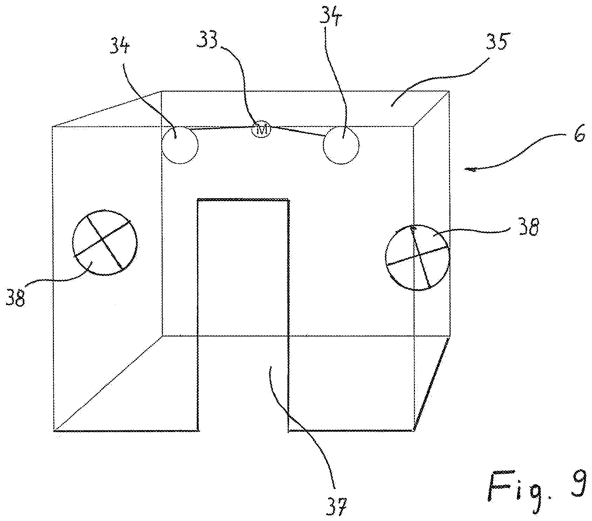

In Figur 9 ist eine weitere Ausgestaltung der Lichtzone 6 dargestellt. Neben den Leuchtmitteln im Bereich der Decke 35 der Lichtzone, also am oberen Abschluss der Vorrichtung 1, sind weitere Leuchtmittel 38 auf Höhe des Blattwerks angeordnet. Diese Leuchtmittel 38 können sowohl auf die äußeren Blätter, die sich weiter unten, also in Richtung Wurzelwerk befinden, oder über entsprechende Verlängerungen auch in das Blattwerk selbst gerichtet sein, so dass auch die Blätter, die nicht unmittelbar von den oberen Leuchtmitteln 34 erreicht werden, mit Licht versorgt werden. Vorzugsweise weist das Leuchtmittel eine auf die Pflanze 39 abgestimmte Lichtleistung auf.

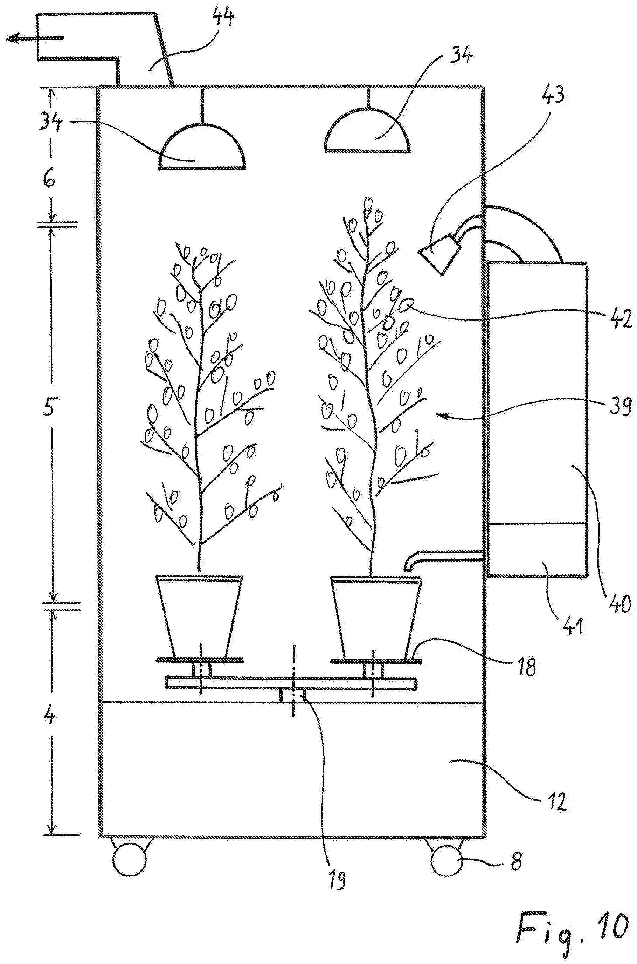

In Figur 10 ist eine Ausgestaltung der erfindungsgemäßen Vorrichtung 1 dargestellt, in welcher zwei Pflanzen 39 auf jeweils einem Drehteller 18 angeordnet sind. Das Blattwerk 42 der Pflanzen 39 ragt in die Wachstumszone 5 hinein.

In der hier dargestellten Ausführungsform weist die Vorrichtung 1 einen Mischbehälter 40 auf, in welchem Wasser, entweder aus einem Wasservorratsbehälter oder unmittelbar aus einer Wasserleitung, eingefüllt und mit Düngemittel und/oder Nährstoffen vermischt werden kann. Der Mischbehälter, über welchen das Wasser gegebenenfalls mit Nährstoffen und Düngemitteln zur Pflanze zugefügt wird, hat den Vorteil, dass eine definierte Menge Düngemittel und Nährstoffe mit einer ebenfalls vorgegebenen Menge Wasser vermischt und zur Pflanze zugegeben werden können. Die Zugabe sowohl von Wasser als auch von den Düngemitteln und Nährstoffen kann bedarfsorientiert erfolgen, beispielsweise nach Durchführen einer Substratanalyse. Vorzugsweise werden kontinuierlich oder in regelmäßigen Abständen die Feuchtigkeit der Pflanzerde und auch der Dünger- und Nährstoffgehalt gemessen und in Abhängigkeit der Messergebnisse werden Wasser und gegebenenfalls Düngemittel sowie Nährstoffe zudosiert. Die Dosierung kann mittels einer Dosierungseinrichtung 41 und einem Schlauch direkt an oder in die Pflanzerde geleitet werden. Es hat sich auch für das Pflanzenwachstum als sehr vorteilhaft erwiesen, wenn auch die Blätter 42 mit Wasser oder einer Düngemittel- bzw. Nährstofflösung besprüht werden. Dies kann über Sprühköpfe 43 erfolgen, die in Höhe des Blattwerks angeordnet sind. Vorzugsweise ist der Sprühkopf 43 verstellbar angeordnet, z. B. in der Höhe verstellbar.

Um ein gleichmäßiges Pflanzenwachstum aller in der Vorrichtung 1 vorhandenen Pflanzen 39 zu erreichen, ist es vorteilhaft, wenn pro Pflanze jeweils mindestens eine Dosierungseinrichtung 41 und eine entsprechende Anzahl von Sprühköpfen 43 vorhanden sind. Sowohl der Schlauch der Dosierungseinrichtung 41 als auch die Sprühköpfe 43 sollten verstellbar sein, um die Dosierung in Abhängigkeit von der Größe der Pflanzen optimal zu halten.

In einer weiteren Ausführungsform weist die erfindungsgemäße Vorrichtung nur eine Dosierungseinrichtung 41 auf, die vorzugsweise ortsfest ist. Die Pflanze wird dann, gegebenenfalls über eine entsprechende Steuerungseinrichtung, in Richtung Dosierungseinrichtung bewegt, wo sie ihre Nährstoffe erhält. Analog werden auch die anderen Pflanzen versorgt, z. B. periodisch oder der Reihe nach.

Hat die Pflanze eine gewisse Größe erreicht, kann über einen Sensor in der Vorrichtung, der die Höhe des Leuchtmittels 34 steuert, ein Signal an die Bewässerung 26 gesendet werden, weitere Sprühvorrichtungen 43, die im oberen Teil Wachstumszone 5 oder der Lichtzone 6 angeordnet sind, frei zu schalten, um so auch die oberen Blätter 42 der größer gewordenen Pflanze 39 befeuchten zu können.

Die Dosierung von Wasser sowie Düngemittel und auch Nährmitteln erfolgt in Abhängigkeit von den erhaltenen Analyseergebnissen über eine geeignete Steuerung. Der Düngemittel- und Nährstoffbedarf sowie der Feuchtigkeitsbedarf wird über entsprechende Sensoren und Feuchtigkeitssensoren bestimmt.

Die Wasserzufuhr in den Mischbehälter 40 erfolgt vorzugsweise ebenfalls automatisch über die Steuerung; sobald der Füllstand des Wassers einen gewissen Punkt unterschritten hat, wird frisches Wasser in den Mischbehälter nachgefüllt.

In der hier dargestellten Ausführungsform sind die Leuchtmittel 34 oben, also an der Decke der Vorrichtung 1 angebracht, so dass das Blattwerk 42 von oben mit Licht versorgt wird.

Die erfindungsgemäße Vorrichtung hat darüber hinaus den Vorteil, dass sie als geschlossenes System ausgestaltet werden kann, d. h. Geruchsbelästigungen durch die Pflanze selbst oder auch Lichtstreuungen können unterbunden werden. In einer möglichen Ausgestaltung kann die Vorrichtung mit Unterdruck betrieben werden, so dass keine Gerüche nach außen dringen.

Bei Pflanzen, die einen starken Eigengeruch entwickeln, ist es möglich, einen entsprechenden Aktivkohlefilter innerhalb der Vorrichtung vorzusehen. Kombiniert man einen solchen Filter mit einem Ventilator, der einen ständigen Unterdruck erzeugt, können Geruchsbelästigungen vollständig vermieden werden. Es ist auch möglich, über die entsprechende Vorrichtung angeschlossene Einrichtungen die Luft direkt aus dem Inneren der Vorrichtung über eine Absaugvorrichtung 39 nach außen abzuführen.

Die erfindungsgemäße Vorrichtung kann über eine entsprechende Schnittstelle mit einem Computer verbunden werden, so dass ein entsprechendes Steuerungsmodul die Steuerung der Versorgung der Pflanzen vornehmen kann. Es ist möglich, jede Pflanze separat anzusteuern, so dass die Versorgung jeder Pflanze individuell in Abhängigkeit von den jeweiligen Bedarfswerten, die aus den Analysen und gegebenenfalls Beobachtungen der Pflanzen erhalten werden, vorgenommen werden kann.

Ein Tagesablauf unter Verwendung der erfindungsgemäßen Vorrichtung könnte wie folgt aussehen:
Uhrzeit
- 05:57: Vermessung Abstand Pflanze - Lampe
- 05:58: Korrektur Abstand Pflanze - Lampe
- 05:59: Bedarfsanalyse
- 06:00: Licht an
- 06:01: Besprühen der Blätter und Bewässern der Pflanze
- 07:00: Ventilator, Intervallschaltung zu jeder vollen Stunde 30 Minuten
- 08:00: Karussell dreht sich um 90°
- 09:00: Teller drehen sich um 180°
- 12:00: Besprühen der Pflanze
- 18:00: Licht aus (in der Blütezeit)
- 24:00: Licht aus (in der Vegetationszeit)

### Bezuaszeichenliste

- 1: Vorrichtung
- 2: Profil
- 3: Fläche
- 4: Basiszone
- 5: Wachstumszone
- 6: Lichtzone
- 7: Substrat
- 8: Rollen
- 12: untere Ebene der Basiszone
- 13: obere Ebene der Basiszone
- 14: Pumpe
- 16: Platte
- 17: Aufnahme für Pflanzbehälter
- 18: Drehteller
- 19: Drehkreuz
- 19A: Elektromotor
- 20: Lager
- 24: Zu- und Ableitung
- 25: Ventilatoren
- 26: Bewässerung
- 27: Substratanalyse
- 30: Öffnung
- 33: Elektromotor
- 34: Leuchtmittel
- 35: Oberseite
- 37: Öffnung Lichtzone
- 38: weitere Leuchtmittel
- 39: Pflanze
- 40: Mischbehälter
- 41: Dosierungseinrichtung
- 42: Blattwerk
- 43: Sprühkopf
- 44: Luftabsaugung

## Patentansprüche

1. Vorrichtung zur Pflanzenzucht (1) mit mehreren Zonen, welche eine Basiszone (4) mit Anschlüssen und Einrichtungen für die Versorgung mit Wasser und Elektrizität (24, 25, 26, 27), eine Wachstumszone (5) für die Aufnahme der Blatt-tragenden Teile der Pflanzen und eine Lichtzone (6) mit einer oder mehreren Beleuchtungseinheiten (34) aufweist, wobei die Basiszone (4) in eine obere Ebene (14) und eine untere Ebene (13) unterteilt ist, wobei die obere Ebene (14) eine drehbare Anordnung (18) zur Aufnahme von Pflanzen bzw. Pflanzbehältern aufweist, **dadurch gekennzeichnet, dass** in der unteren Ebene (13) Anschlüsse und Einrichtungen (24, 25, 26, 27) für die Versorgung mit Wasser und Elektrizität angeordnet sind.

2. Vorrichtung nach Anspruch 1, **dadurch gekennzeichnet, dass** die drehbare Anordnung (18) ein Drehkreuz ist, an welchem drehbar gelagerte Aufnahmen für die Pflanze bzw. die Pflanzbehälter angeordnet sind.

3. Vorrichtung nach einem der Ansprüche 1 oder 2, **dadurch gekennzeichnet, dass** die Wachstumszone (5) Einrichtungen zur Bewässerung, für den Luftaustausch und/oder für die Durchführung von Analysen aufweist.

4. Vorrichtung nach einem der Ansprüche 1 bis 3, **dadurch gekennzeichnet, dass** die Wachstumszone (5) an einer Seite eine verschließbare Öffnung (30) aufweist.

5. Vorrichtung nach einem der Ansprüche 1 bis 4, **dadurch gekennzeichnet, dass** in der Lichtzone (6) am oberen Abschluss der Vorrichtung Leuchtmittel (34) zum Bestrahlen der Pflanze mit Licht angeordnet sind.

6. Vorrichtung nach einem der Ansprüche 1 bis 7, **dadurch gekennzeichnet, dass** weitere Leuchtmittel (38) zum Bestrahlen der Blätter von der Seite angeordnet sind.

7. Vorrichtung nach Anspruch 5 oder 6, **dadurch gekennzeichnet, dass** der Abstand des Leuchtmittels zur Pflanze automatisch einstellbar ist.

8. Vorrichtung nach einem der Ansprüche 1 bis 7, **dadurch gekennzeichnet, dass** die Vorrichtung auf Rollen gelagert ist.

9. Vorrichtung nach einem der Ansprüche 1 bis 10, **dadurch gekennzeichnet, dass** die Vorrichtung einen Behälter zum Mischen von Wasser mit Düngemittel, Nährstoffen und/oder Luft aufweist.

## Claims

1. Device for cultivating plants (1) with multiple zones, which comprises a base zone (4) with connections and devices for supplying water and electricity (24, 25, 26, 27), a growth zone (5) for receiving the leaf-bearing parts of the plants, and a light zone (6) with one or more illumination units (34), the base zone (4) being divided into an upper level (14) and a lower level (13), the upper level (14) having a rotatable arrangement (18) for receiving plants or plant containers, **characterized in that** connections and devices (24, 25, 26, 27) for supplying water and electricity are arranged on the lower level (13).

2. Device according to Claim 1, **characterized in that** the rotatable arrangement (18) is a hub on which rotatably mounted receptacles for the plant or the plant containers are arranged.

3. Device according to either of Claims 1 and 2, **characterized in that** the growth zone (5) has devices for irrigation, for air exchange and/or for carrying out analyses.

4. Device according to one of Claims 1 to 3, **characterized in that** the growth zone (5) has a closable opening (30) on one side.

5. Device according to one of Claims 1 to 4, **characterized in that** in the light zone (6) lighting means (34) for irradiating the plant with light are arranged on the upper termination of the device.

6. Device according to one of Claims 1 to 7, **characterized in that** further lighting means (38) are arranged for irradiating the leaves from the side.

7. Device according to Claim 5 or 6, **characterized in that** the distance of the lighting means from the plant is automatically adjustable.

8. Device according to one of Claims 1 to 7, **characterized in that** the device is mounted on rollers.

9. Device according to one of Claims 1 to 10, **characterized in that** the device has a container for mixing water with fertiliser, nutrients and/or air.

## Revendications

1. Dispositif destiné à la culture de plantes (1) en plusieurs zones, lequel dispositif comporte une zone de base (4) pourvues de raccords et d'équipements destinés à l'alimentation en eau et en électricité (24, 25, 26, 27), une zone de croissance (5) destinée à recevoir des parties des plantes qui portent des feuilles et une zone lumineuse (6) comportant une ou plusieurs unités d'éclairage (34),
la zone de base (4) étant divisée en un niveau supérieur (14) et un niveau inférieur (13), le niveau supérieur (14) comportant un ensemble rotatif (18) destiné à recevoir des plantes ou des bacs à plantes, **caractérisé en ce que** des raccords et des équipements (24, 25, 26, 27) destinés à l'alimentation en eau et en électricité sont disposés au niveau inférieur (13).

2. Dispositif selon la revendication 1, **caractérisé en ce que** l'ensemble rotatif (18) est un tourniquet sur lequel sont disposés des logements montés de manière rotative et destinés à la plante ou à des bacs à plantes.

3. Dispositif selon l'une des revendications 1 et 2, **caractérisé en ce que** la zone de croissance (5) comporte des équipements d'irrigation, de renouvellement d'air et/ou de réalisation d'analyses.

4. Dispositif selon l'une des revendications 1 à 3, **caractérisé en ce que** la zone de croissance (5) comporte sur un côté une ouverture fermable (30).

5. Dispositif selon l'une des revendications 1 à 4, **caractérisé en ce que** des moyens d'éclairage (34) destinés à éclairer la plante sont disposés dans la zone lumineuse (6) à l'extrémité supérieure du dispositif.

6. Dispositif selon l'une des revendications 1 à 7, **caractérisé en ce que** d'autres moyens d'éclairage (38) sont disposés de manière à éclairer les feuilles depuis le côté.

7. Appareil selon la revendication 5 ou 6, **caractérisé en ce que** la distance entre le moyen d'éclairage et la plante peut être réglée automatiquement.

8. Dispositif selon l'une des revendications 1 à 7, **caractérisé en ce que** le dispositif est monté sur des roulettes.

9. Dispositif selon l'une des revendications 1 à 10, **caractérisé en ce que** le dispositif comporte un récipient destiné à mélanger de l'eau avec des engrais, des nutriments et/ou de l'air.
